# EUROPEAN PATENT APPLICATION

(11) **EP 4 789 806 A1**
(43) Date of publication of application: **12.08.2026**
(21) Application number: 25869583.2
(22) Date of filing: 02.10.2025
(51) Int. Cl.: B23K 20/10, H01M 50/54

(54) **WELDING APPARATUS**

(30) Priority: 17.12.2024 KR 20240188233
(71) Applicant: LG ENERGY SOLUTION, LTD., Seoul 07335 (KR)
(72) Inventor: LEE, Won Gu, Yuseong-gu Daejeon 34122 (KR)
(74) Representative: Goddar, Heinz J.
(86) International application number: PCT/KR2025/015846
(87) International publication number: WO 2026/134574

(57) **Abstract**

The present disclosure relates to a welder for welding an electrode tab of a secondary battery, and the welder may include an anvil on which the electrode tab is mounted, and a horn configured to move from an opposite direction to the anvil with the electrode tab positioned therebetween to weld the electrode tab. The horn may include a body portion including a first contact surface that contacts the electrode tab, and an expansion portion detachably coupled to the body portion, the expansion portion including a second contact surface that extends from the first contact surface and contacts the electrode tab.

## Description

### TECHNICAL FIELD

### CROSS-REFERENCE TO RELATED APPLICATIONS

This application is based on and claims priority from Korean Patent Application No. 10-2024-0188233 filed on December 17, 2024 with the Korean Intellectual Property Office, the disclosure of which is incorporated herein in its entirety by reference.

### TECHNICAL FIELD

The present disclosure relates to a welder, and more particularly, to a welder with reduced production and replacement costs of a horn and improved welding efficiency.

### BACKGROUND ART

In general, the types of secondary batteries include nickel-cadmium batteries, nickel-hydrogen batteries, lithium-ion batteries and lithium-ion polymer batteries. Secondary batteries are used not only in small products such as digital cameras, P-DVDs, MP3Ps, mobile phones, PDAs, portable game devices, power tools and e-bikes, but also larger products requiring high output such as electric vehicles or hybrid electric vehicles as well as power storage systems that store surplus power or renewable energy and backup power storage systems.

To manufacture secondary batteries, first, a positive electrode active material slurry is applied to a positive current collector and a negative electrode active material slurry is applied to a negative current collector to manufacture a positive electrode (also referred to as cathode) and a negative electrode (also referred to as anode), respectively, and the positive electrode and the negative electrode are stacked on two sides of a separator to form an electrode assembly of a predetermined shape. The electrode assembly is housed in a battery case, and an electrolyte solution is injected into the battery case that is then sealed.

The electrode assembly includes the plurality of electrodes stacked on top of each other, and to easily supply electricity generated from the electrodes to an external device, each electrode has an electrode tab. The electrode tabs are connected by welding such that positive electrode tabs contact each other and negative electrode tabs contact each other. Each electrode tab is connected to each of a positive electrode lead and a negative electrode lead. The process of connecting the electrode tabs may be performed through an ultrasonic welding process. When pressure is applied to two surfaces of the electrode tabs and ultrasound is applied using an ultrasonic welder, vibrational energy of the welder is converted to thermal energy by friction to perform the welding.

### DISCLOSURE

### TECHNICAL PROBLEM

The present disclosure is designed to solve the above-described problems, and therefore the present disclosure is directed to providing a welder with reduced production and replacement costs of a horn and improved welding efficiency.

### TECHNICAL SOLUTION

A welder for welding an electrode tab of a secondary battery according to an embodiment of the present disclosure may include an anvil on which the electrode tab is mounted and a horn configured to move from an opposite direction to the anvil with the electrode tab positioned therebetween to weld the electrode tab. The horn may include a body portion including a first contact surface that contacts the electrode tab, and an expansion portion detachably coupled to the body portion, the expansion portion including a second contact surface that extends from the first contact surface and contacts the electrode tab.

A fastening hole may be defined in a side of the body portion, and a through-hole may be defined in a side of the expansion portion, the through-hole passing through the expansion portion and facing the fastening hole.

The horn may further include a connector detachably coupling the body portion to the expansion portion.

The connector may be a bolt having a screw thread on an outer peripheral surface, and an inner peripheral surface of the fastening hole may have a female screw hole that matches the screw thread.

The connector may be coupled to the fastening hole of the body portion through the through-hole of the expansion portion to couple the body portion to the expansion portion.

The expansion portion may include a first expansion portion coupled to a side of the body portion and a second expansion portion coupled to an opposite side of the body portion.

The connector may include a first connector detachably coupling the body portion to the expansion portion, and a second connector spaced apart from the first connector in a thickness direction of the horn, the second connector detachably coupling the body portion to the expansion portion.

The body portion of the horn may further include a non-contact surface that extends from the first contact surface in a first direction, and the second contact surface of the expansion portion may extend from the first contact surface in a second direction perpendicular to the first direction and parallel to a width direction of the horn.

A sum of a width of the first contact surface in the second direction and a width of the second contact surface in the second direction may be larger than a width of the non-contact surface in the second direction.

A sum of a width of the first contact surface in the second direction and a width of the second contact surface in the second direction may correspond to a width of the electrode tab in the second direction.

### ADVANTAGEOUS EFFECTS

According to the above description, as the expansion portion is detachably coupled to the body portion, the horn may weld various electrode tabs having different widths. The welder of the present disclosure may weld electrode tabs corresponding to the width of the body portion and electrode tabs corresponding to the width of the combination of the body portion and the expansion portion by using one horn. Accordingly, it may be possible to reduce the production and replacement costs of the horn and improve welding efficiency.

### BRIEF DESCRIPTION OF THE DRAWINGS

FIG. 1 is a front view of a welder according to an embodiment of the present disclosure.
FIG. 2 is a plan view of a welder according to an embodiment of the present disclosure.
FIG. 3 is a side view of a welder according to an embodiment of the present disclosure.

### BEST MODE

Hereinafter, exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

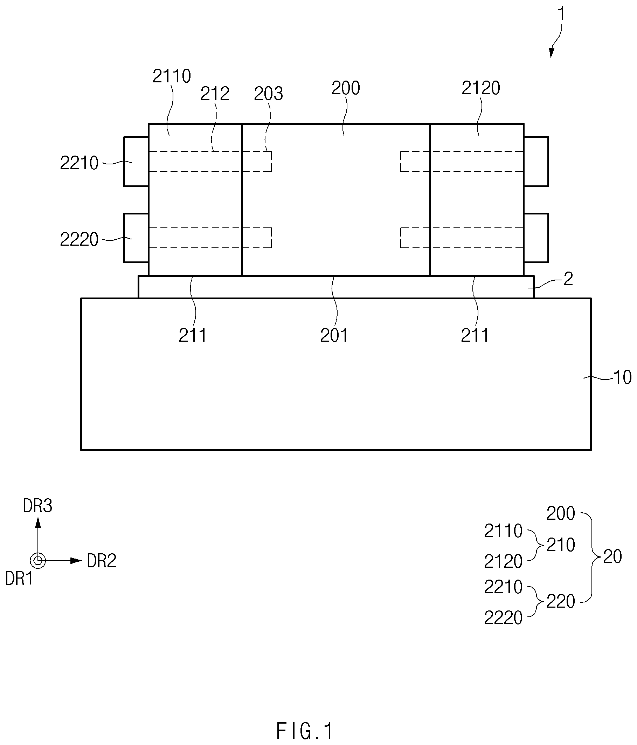

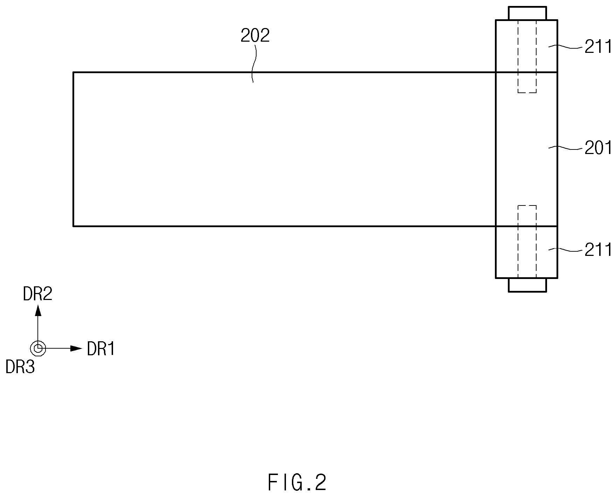

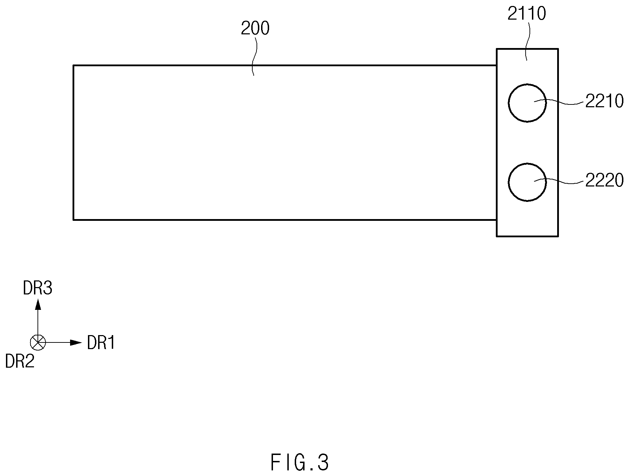

FIG. 1 is a front view of a welder 1 according to an embodiment of the present disclosure. FIG. 2 is a plan view of the welder 1 according to an embodiment of the present disclosure. FIG. 3 is a side view of the welder 1 according to an embodiment of the present disclosure.

Referring to FIGS. 1 to 3, the welder 1 may weld an electrode tab 2 of a secondary battery. For example, the welder 1 may apply an ultrasound to the electrode tab 2 of the secondary battery to generate micro-vibration and melt parts that are in direct contact with friction-induced thermal energy to join them.

The welder 1 may include an anvil 10 and a horn 20. The electrode tab 2 may be mounted on the anvil 10. The anvil 10 may support the electrode tab 2 and prevent the electrode tab 2 from moving. The horn 20 may move from an opposite direction to the anvil 10 with the electrode tab 2 positioned therebetween to weld the electrode tab 2. The horn 20 may be spaced apart from the anvil 10 in a third direction DR3 with the electrode tab 2 positioned therebetween, and the horn 20 may transmit ultrasonic vibration to an object to be welded (for example, the electrode tab 2).

In this specification, the third direction DR3 may refer to a normal direction to a plane defined by a first direction DR1 and a second direction DR2. The first to third directions DR1, DR2, DR3 described below may be relative directions.

The horn 20 may include a body portion 200 and an expansion portion 210 detachably coupled to the body portion 200. The expansion portion 210 may include a first expansion portion 210 coupled to one side of the body portion 200 and a second expansion portion 210 coupled to the other side of the body portion 200. The first expansion portion 210 and the second expansion portion 210 may be coupled to two sides of the body portion 200 in a direction parallel to the second direction DR2.

The body portion 200 may include a first contact surface 201 that contacts the electrode tab 2. The expansion portion 210 may include a second contact surface 211 that extends from the first contact surface 201 and contacts the electrode tab 2. That is, the first contact surface 201 and the second contact surface 211 may be surfaces of contact with the electrode tab 2. The first contact surface 201 and the second contact surface 211 may contact the electrode tab 2 in a planar manner.

A fastening hole 203 may be defined in a side of the body portion 200, and a through-hole 212 may be defined in a side of the expansion portion 210. The through-hole 212 may pass through the expansion portion 210 and face the fastening hole 203. The width and shape of the through-hole 212 may correspond to the width and shape of the fastening hole 203. In an embodiment, the fastening hole 203 may be formed by removing a part of the side of the body portion 200.

The horn 20 may further include a connector 220 detachably coupling the body portion 200 to the expansion portion 210. The connector 220 may be a bolt having a screw thread on an outer peripheral surface, and an inner peripheral surface of the fastening hole 203 may have a female screw hole that matches the screw thread. The connector 220 may be coupled to the fastening hole 203 of the body portion 200 through the through-hole 212 of the expansion portion 210 to couple the body portion 200 to the expansion portion 210.

The connector 220 may include a plurality of connectors. For example, the connector 220 may include a first connector 2210 and a second connector 2220. The first connector 2210 and the second connector 2220 may detachably couple the body portion 200 to the expansion portion 210. The second connector 2220 may be spaced apart from the first connector 2210 in the thickness direction of the horn 20 (for example, the third direction DR3). In an embodiment, the welder 1 may include the first and second connectors 2210, 2220 coupling the body portion 200 to the first expansion portion 210, and the first and second connectors 2210, 2220 coupling the body portion 200 to the second expansion portion 210. FIG. 1 shows four connectors for illustration purposes, but the number of connectors is not limited to the above example and may include any number of connectors for detachably coupling the body portion 200 to the expansion portion 210. For example, the present disclosure may include three connectors coupling the body portion 200 to the first expansion portion 210.

Referring to FIG. 2, the body portion 200 of the horn 20 may further include a non-contact surface 202 that extends from the first contact surface 201 in the first direction DR1. The second contact surface 211 of the expansion portion 210 may extend from the first contact surface 201 in the second direction DR2 perpendicular to the first direction DR1. The second direction DR2 may be a direction parallel to the width direction of the horn 20 and may be a direction in which the expansion portion 210 is coupled to the body portion 200.

The width of the non-contact surface 202 in the second direction DR2 may correspond to the width of the first contact surface 201 in the second direction DR2. As the expansion portion 210 is coupled to the body portion 200, the sum of the width of the first contact surface 201 in the second direction DR2 and the width of the second contact surface 211 in the second direction DR2 may be larger than the width of the non-contact surface 202 in the second direction DR2. The sum of the width of the first contact surface 201 in the second direction DR2 and the width of the second contact surface 211 in the second direction DR2 may correspond to the width of the electrode tab 2 in the second direction DR2.

The horn 20 of the present disclosure may weld various electrode tabs 2 having different widths as the expansion portion 210 is detachably coupled to the body portion 200. The welder 1 of the present disclosure may weld electrode tabs 2 corresponding to the width of the body portion 200 and electrode tabs 2 corresponding to the width of the combination of the body portion 200 and the expansion portion 210 by using one horn 20. Accordingly, it may be possible to reduce the production and replacement costs of the horn 20 and improve welding efficiency.

Although the present disclosure has been hereinabove described with regard to certain embodiments and drawings, the present disclosure is not limited thereto, and a variety of modifications and changes may be made by persons having ordinary skill in the technical field pertaining to the present disclosure within the technical aspects of the present disclosure and the appended claims and their equivalents.

### [List of Reference Numerals]

1: Welder
2: Electrode tab
10: Anvil
20: Horn
200: Body portion
201: First contact surface
202: Non-contact surface
203: Fastening hole
210: Expansion portion
211: Second contact surface
2110: First expansion portion
2120: Second expansion portion
220: Connector
212: Through-hole
2210: First connector
2220: Second connector

## Claims

1. A welder for welding an electrode tab of a secondary battery, the welder comprising:
an anvil on which the electrode tab is mounted; and
a horn configured to move from an opposite direction to the anvil with the electrode tab positioned therebetween to weld the electrode tab,
wherein the horn includes:
a body portion including a first contact surface that contacts the electrode tab; and
an expansion portion detachably coupled to the body portion, the expansion portion including a second contact surface that extends from the first contact surface and contacts the electrode tab.

2. The welder according to claim 1,
wherein a fastening hole is defined in a side of the body portion, and a through-hole is defined in a side of the expansion portion, the through-hole passing through the expansion portion and facing the fastening hole.

3. The welder according to claim 2,
wherein the horn further includes a connector detachably coupling the body portion to the expansion portion.

4. The welder according to claim 3,
wherein the connector is a bolt having a screw thread on an outer peripheral surface, and an inner peripheral surface of the fastening hole has a female screw hole that matches the screw thread.

5. The welder according to claim 4,
wherein the connector is coupled to the fastening hole of the body portion through the through-hole of the expansion portion to couple the body portion to the expansion portion.

6. The welder according to claim 3,
wherein the expansion portion includes a first expansion portion coupled to a side of the body portion and a second expansion portion coupled to an opposite side of the body portion.

7. The welder according to claim 3,
wherein the connector includes:
a first connector detachably coupling the body portion to the expansion portion; and
a second connector spaced apart from the first connector in a thickness direction of the horn, the second connector detachably coupling the body portion to the expansion portion.

8. The welder according to claim 3,
wherein the body portion of the horn further includes a non-contact surface that extends from the first contact surface in a first direction, and
wherein the second contact surface of the expansion portion extends from the first contact surface in a second direction perpendicular to the first direction and parallel to a width direction of the horn.

9. The welder according to claim 8,
wherein a sum of a width of the first contact surface in the second direction and a width of the second contact surface in the second direction is larger than a width of the non-contact surface in the second direction.

10. The welder according to claim 8,
wherein a sum of a width of the first contact surface in the second direction and a width of the second contact surface in the second direction corresponds to a width of the electrode tab in the second direction.
